(19) **Europäisches Patentamt**

**European Patent Office**

**Office européen des brevets**

(11) **EP 0 764 932 B1**

(12) **EUROPEAN PATENT SPECIFICATION**

(45) Date of publication and mention
of the grant of the patent:
**25.06.2003 Bulletin 2003/26**

(51) Int Cl.⁷: **G09G 3/36**

(21) Application number: **96306402.7**

(22) Date of filing: **04.09.1996**

(54) **A screen clearing circuit, a liquid crystal display device having the same and a method of driving the same**

Schaltung zum Löschen einer Anzeige, Flüssigkristallanzeigegerät mit dieser Schaltung, und Verfahren zu ihrer Ansteuerung

Circuit pour effacer un dispositif d'affichage, affichage à cristaux liquides utilisant ce circuit, et méthode pour le commander

(84) Designated Contracting States:
**DE FR GB**

(30) Priority: **07.09.1995 KR 9529444**

(43) Date of publication of application:
**26.03.1997 Bulletin 1997/13**

(73) Proprietor: **SAMSUNG ELECTRONICS Co. Ltd.
Kyungki-do, Seoul (KR)**

(72) Inventor: **Moon, Seung-Hwan
seocho-ku, Seoul (KR)**

(74) Representative: **Kensett, John Hinton
Saunders & Dolleymore,
9 Rickmansworth Road
Watford, Hertfordshire WD18 0JU (GB)**

(56) References cited:
**EP-A- 0 364 590           EP-A- 0 605 846
US-A- 5 430 460**

## Description

The present invention relates to a screen clearing circuit for a thin film transistor liquid crystal display (hereinafter referred to as a TFT LCD), and a method of clearing the screen. Specifically, it relates to a circuit and method of clearing a TFT LCD when the external power is removed from the liquid crystal display.

The prior art is described below in conjunction with the accompanying drawings, in which:

> Figure 1 is an equivalent circuit of the gate structure of a prior art TFT LCD;
> Figure 2 is a diagram of the current-voltage characteristic curve of a prior art thin-film transistor in a TFT LCD; and
> Figure 3 is a diagram which shows the typical prior art voltage waveforms applied to the gates of the TFTs in a TFT LCD.

Each dot of a pixel in a TFT LCD comprises a thin-film transistor, a liquid crystal capacitor Clc, and a support capacitor Cst. Examples of such dots are shown in e.g. patent publication US 5 430 460 A.

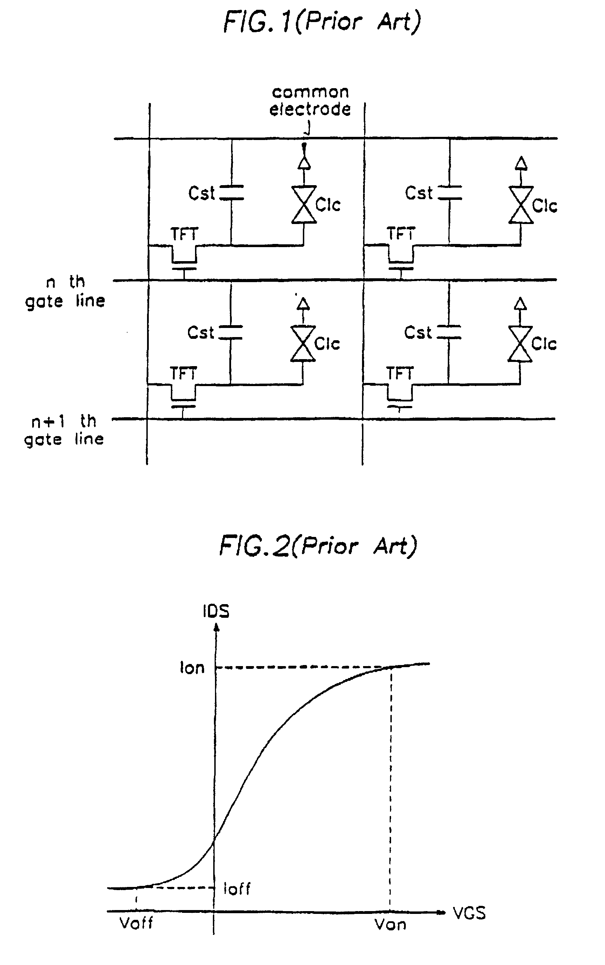

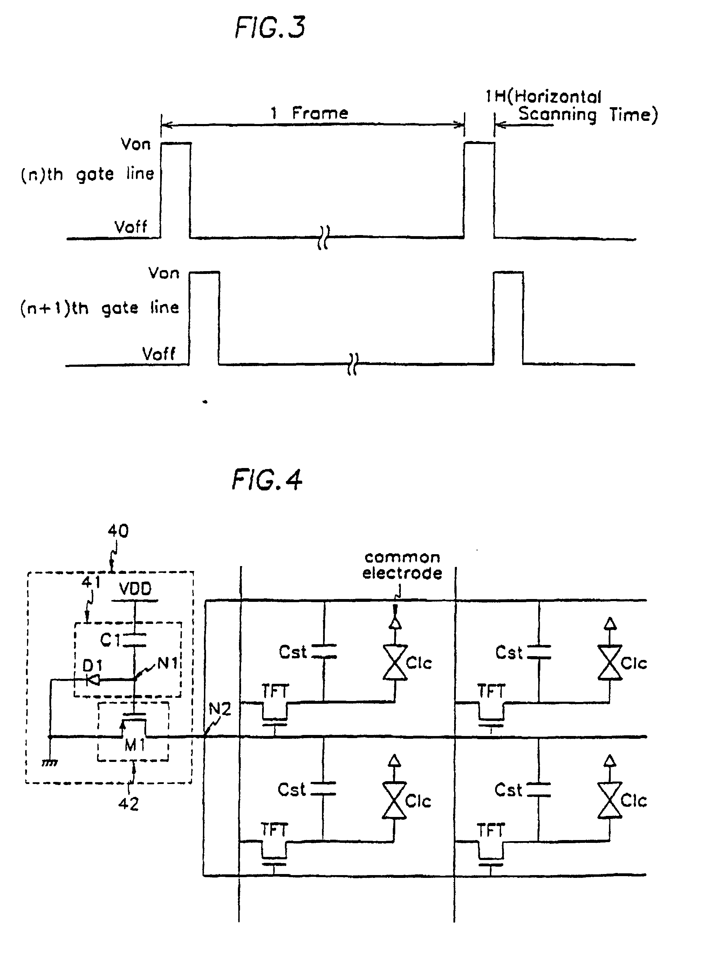

As shown in Figure 1, when a TFT is turned on, a liquid crystal capacitor Clc receives the voltage applied to the source electrode of the TFT, and the liquid crystal is switched to a contrast mode. Referring to Figure 3, it can be seen that the TFTs connected to the gate lines are sequentially turned on by voltage Von applied to the gate line, and then turned off by a voltage Voff applied to the gate line. After the desired voltage is supplied to the liquid crystal capacitor Clc, the TFT is turned off during one frame to prevent the charge in the liquid crystal capacitor Clc from leaking out through the TFT, in order to maintain the contrast in the liquid crystal.

In Figure 1, it can be seen that a support capacitor Cst is charged at the same time that liquid crystal capacitor Clc is charged. support capacitor Cst supplies a charge to compensate for the leakage of charge from the liquid crystal capacitor Clc during the time period when the associated TFT is turned off by voltage Voff applied to the gate of the TFT. Accordingly, the circuit operation prevents excessive discharge of the liquid crystal capacitor Clc, thereby allowing stable contrast during one frame.

Figure 2 shows a typical current-voltage characteristic of a TFT. Referring to Figures 2 and 3, when voltage Von is applied to the gate electrode of a TFT, the current Ion flows through the TFT to cause the voltage at the source electrode to be applied to the liquid crystal capacitor Clc. When voltage Voff is applied to the gate of the TFT, current through the TFT is greatly restricted to a level Ioff, thereby preventing the leakage of charge stored in the liquid crystal capacitor Clc. Typically, voltage Von is greater than 20V and voltage Voff is less than -2V.

The prior art circuit described above has a latching problem when power is removed from the TFT LCD. Immediately before the power supply is removed from a TFT LCD, voltage Voff is applied to the gate electrodes of most of the TFTs, and voltage Voff is stored in the associated support capacitors Cst. This causes a latching situation with respect to the TFTs and associated capacitors in that the charge in the capacitor Cst maintains the TFT in the "off" condition, thereby preventing discharge of capacitor Cst. Therefore, the display screen of the TFT LCD remains on and it retains an image after the power supply is turned off. The control circuitry of a Prior Art TFT LCD does not allow the display screen to be cleared quickly, thereby resulting in the display of a residual image. This may cause the user of such a TFT LCD to have an unfavourable impression about the product quality.

It is an object of the invention to provide a screen clearing circuit and method for a TFT LCD, in which the screen is cleared quickly after the power is shut off.

It is a further object of the invention to provide a circuit and method for quickly discharging the support capacitors in a TFT LCD after the power is shut off. An example of a prior art screen clearing circuit is known from e.g. patent publication EP 0 364 590.

According to an aspect of the present invention there is provided a liquid crystal display in accordance with that claimed in independent claim 1.

According to another aspect of the present invention there is provided a method of operating a liquid crystal display device in accordance with that claimed in independent claim 5.

Embodiments of the invention will now be described, by way of example only, with reference to the accompanying drawings, in which:

> Figure 1 is an equivalent circuit of the gate structure of a typical prior art LCD;
> Figure 2 is a diagram of the current-voltage characteristic curve of a prior art thin-film transistor in a TFT LCD;
> Figure 3 is a diagram which shows the typical prior art voltage waveforms applied to the gates of the TFTs in a TFT LCD;
> Figure 4 is a screen clearing circuit according to an embodiment of the present invention;

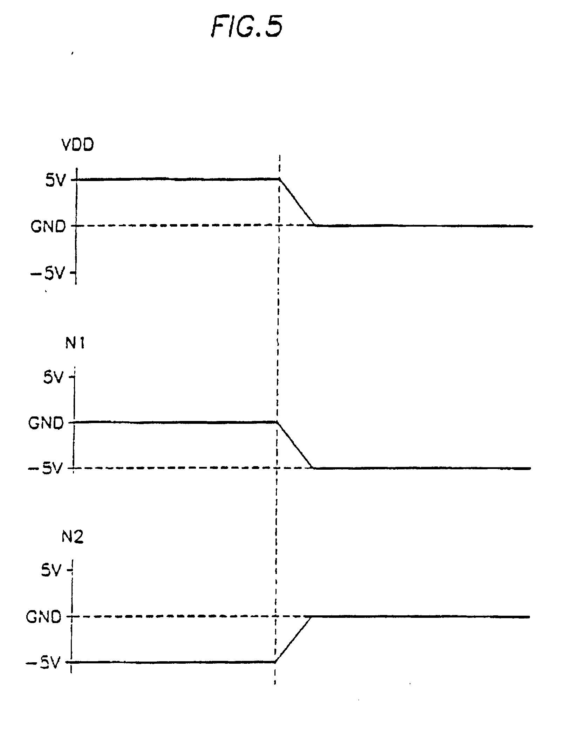

> Figure 5 shows the voltage waveforms of VDD, N1 and N2 in a screen clearing circuit operating according to an embodiment of the present invention; and

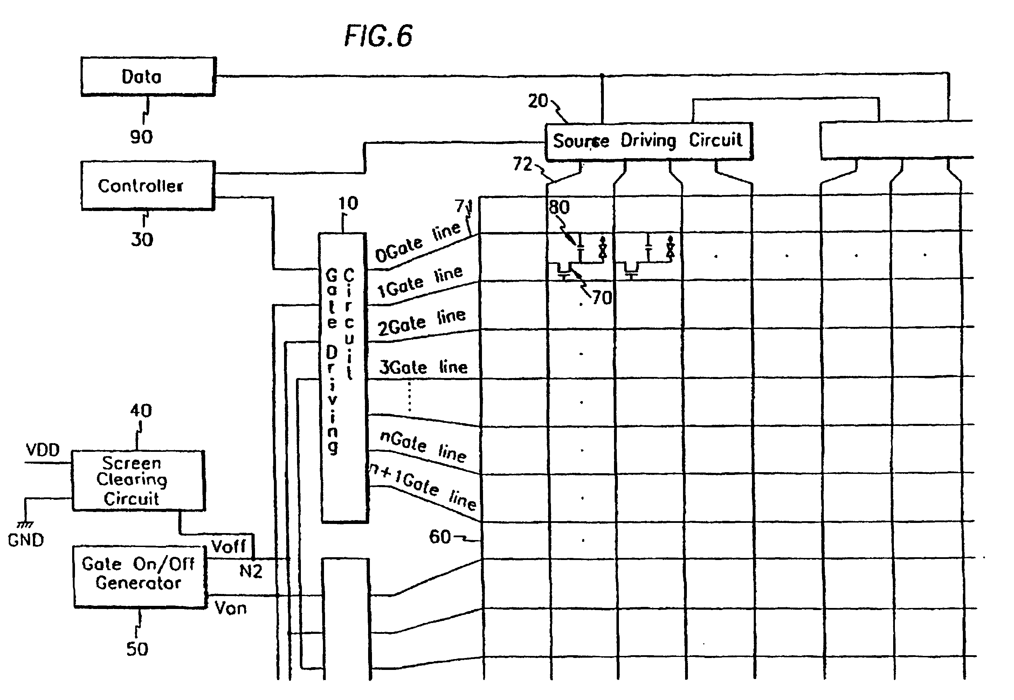

> Figure 6 is an embodiment of the invention which shows the screen clearing circuit illustrated in Figure 4, connected to a different portion of the TFT LCD circuitry.

Preferred embodiments of the present invention are described below in detail in conjunction with the accompanying drawings.

Figure 4 shows a screen clearing circuit 40 according to an embodiment of the present invention. The screen clearing circuit 40 is connected to each gate line in the TFT LCD. The screen clearing circuit 40 is inactive when external power VDD is being applied, but when VDD is shut off, the circuit operates to discharge the support capacitor Cst.

In Figure 4, the cathode of D1 is grounded, and the anode of D1 is connected through a first node N1 to one end of the capacitor C1, which has its other end connected to external power VDD. The source electrode of PMOS transistor M1 is grounded, and the drain electrode of PMOS transistor M1 is connected to one end of support capacitor Cst. The other end of support capacitor Cst is connected to the drain electrode of a TFT in the TFT LCD. The gate electrode of PMOS transistor M1 is connected to the first node N1.

Referring to Figures 4 and 5, the external power VDD is applied before time T (in Figure 5), and the first node N1 becomes approximately ground level voltage GND through the diode D1 (ignoring the voltage drop through D1), and at the same time, capacitor C1 is charged with the following quantity of charge Q1:

$$Q1 = C1 * (GND - VDD) \qquad (1)$$

Assuming that VDD is 5V and GND is 0V:

$$Q1 = C1 * (-5V) \qquad (1a)$$

Therefore:

$$Q1/C1 = (-5V) \qquad (1b)$$

After time T (in Figure 5), when the external power VDD is shut off, VDD becomes the ground level voltage 0V, and the following voltage level V1 appears at the first node N1:

$$V1 = Q1/C1 + GND \qquad (2)$$

From equation (1b) above, Q1/C1 = (-5V), and the voltage V1 at node N1 becomes:

$$V1 = (-5V) \qquad (2a)$$

When the voltage V1 at node N1 is (-5V), PMOS transistor M1 is turned on, thereby discharging support capacitor Cst, as explained more fully below.

The capacitor C1 and diode D1 constitute a power shut-off detecting circuit 41, which detects whether external power VDD is being supplied. Node N1 shows a ground level 0V when external 5V power VDD is being supplied, while it shows (-5V), the opposite polarity of the external power, when the external power is shut off. The voltage at node N1 controls the PMOS transistor M1 so as to discharge the support capacitor Cst when the external power is shut off.

In Figure 4, when the voltage level of node N1 is 0V, then the gate-source voltage is greater than the threshold voltage Vth (Vgs>Vth) of the PMOS transistor M1, transistor M1 is turned off and it exerts no influence on support capacitor Cst. When the external power VDD is shut off, the voltage level V1 of node N1 becomes -5V and Vgs<Vth, thereby turning on PMOS transistor M1 and discharging support capacitor Cst to ground GND. Accordingly, the GND voltage level is applied to the gates of tho TFTc, thereby turning on the TFTs and providing a path to discharge the liquid crystal capacitor Clc. Discharging the support capacitor Cst and liquid crystal capacitor Clc eliminates the residual image on the TFT LCD.

In Figure 4, power shut-off detecting circuit 41 consists of capacitor C1 and diode D1, which detect whether external power VDD is being supplied. In this embodiment, diode D1 is provided as a reference voltage setting means which supplies a predetermined voltage to the gate of the PMOS transistor M1. A resistor could also be used as the reference voltage setting means without floating the voltage of the gate of transistor M1. Also in this embodiment, PMOS transistor M1 operates as a switching means 42. A separate power shut-off detecting circuit is not required for each switching means. A plurality of switching means may be controlled by a single power shut-off detecting circuit. Other equivalent means having the same functions may be used within the scope of this invention.

Figure 6 shows the screen clearing circuit 40 connected at an input to the gate driving circuit 10, as opposed to the direct connection to the gate lines shown in Figure 4. The controller 30 controls the source driving circuit 20, which, based on the image data 90, 5 supplies data voltage through data lines 72 to each pixel electrode (TFT source electrode), thereby rearranging the orientation of the liquid crystal according to the data voltage, in coordination with the gate-on voltage supplied to a gate line. Controller 30 also controls gate driving circuit 10, which supplies gate on/off voltages sequentially through the gate lines to the thin film transistors 70. The gate on/off generator 50 generates the Voff and Von voltages which are sent to the gate lines by the gate driving circuit 10. The screen clearing circuit 40 is connected to the Voff output of gate on/off generator 50. When the external power is disconnected, the screen clearing circuit 40 operates to discharge the storage capacitors 80 connected to the gate lines. This embodiment requires only one screen clearing circuit 40, whereas the embodiment in Figure 4 requires a separate screen clearing circuit for each gate line.

Elimination of the residual image improves the quality of TFT LCDs. This invention may be used in a wide variety of display devices such as notebook computers, handheld devices, and flat panel television screens.

## Claims

1. A liquid crystal display comprising:

    a plurality of gate lines;
    a plurality of thin film transistors (TFT) each of which is coupled to a gate line and via their drain electrodes to a respective support capacitor (Cst) and liquid crystal capacitor (Clc), each said supporting capacitor (Cst) also being connected to a gate line; **characterised by** a screen clearing circuit (40), coupled to the gate lines and a ground reference line, that includes:

        a switching means (42) that couples the gate lines to the ground reference line in response to a voltage on a node (N1) when a power line (VDD) is shut off, thereby discharging said support capacitors (Cst) and said liquid crystal capacitors (Clc); a reference voltage setting means (D1) serially coupled between a capacitor (C1) and the ground reference line, wherein the capacitor (C1) is serially coupled between the reference voltage setting means and the power line (VDD); and

    wherein the reference voltage setting means sets a reference voltage on said node (N1), said node (N1) being between it and the capacitor (C1).

2. A liquid crystal display as claimed in Claim 1, wherein the reference voltage setting means is a diode.

3. A liquid crystal display as claimed in Claim 1 or 2, wherein the switching means is a pass transistor having a gate coupled to the node.

4. The liquid crystal display of Claim 3, wherein the pass transistor is a PMOS transistor, and an anode of the diode is coupled to the gate of the PMOS transistor.

5. A method of operating a liquid crystal display device containing a plurality of display cells having respective liquid crystal capacitors (Clc) and support capacitors (Cst) therein, and a plurality of gate lines, each said support capacitor (Cst) being connected to a gate line, said method comprising the steps of:

    storing energy in a capacitor (C1) of a screen clearing circuit upon application of a power supply signal (VDD) thereto; and

turning off the plurality of display cells upon removal of the power supply signal, by turning on a pass transistor (M1) which is electrically coupled in series between a ground reference line and the gate lines so that the support capacitors (Cst) and the liquid crystal capacitors (Clc) are discharged to the ground reference line, using the energy stored in the capacitor (C1) of the screen clearing circuit, in coordination with a reference voltage setting means (D1), to drive the pass transistor.

6. The method of Claim 5, wherein the display cells comprise thin-film transistors (TFT) having gate electrodes commonly connected to one of the gate lines, and wherein the pass transistor is electrically coupled in series between the ground reference line and the gate lines.

## Patentansprüche

1. Flüssigkristallanzeige umfassend:

    eine Vielheit von Gateleitungen;
    eine Vielheit von Dünnschichttransistoren (TFT), die jeweils an eine Gateleitung und über ihre Drain-Elektroden an einen entsprechenden Stützkondensator (Cst) und Flüssigkristallkondensator (Clc) gekoppelt sind, wobei jeder besagte Stützkondensator (Cst) außerdem an eine Gateleitung angeschlossen ist; **gekennzeichnet durch** eine Schaltung zum Löschen einer Anzeige (40), gekoppelt an die Gateleitungen und eine Bezugserdeleitung, die einschließt:

        ein Schaltmittel (42), das die Gateleitungen mit der Bezugserdeleitung als Reaktion auf eine Spannung an einem Knoten (N1) koppelt, wenn eine Stromleitung (VDD) abgeschaltet wird, und **dadurch** besagte Stützkondensatoren (Cst) und besagte Flüssigkristallkondensatoren (Clc) entladet; ein Bezugsspannungseinstellmittel (D1), das seriell zwischen einem Kondensator (C1) und der Bezugserdeleitung gekoppelt ist, wobei der Kondensator (C1) seriell zwischen dem Bezugsspannungseinstellmittel

und der Stromleitung (VDD) gekoppelt ist; und wobei das Bezugsspannungseinstellmittel eine Bezugsspannung an besagtem Knoten (N1) einstellt, und sich besagter Knoten (N1) zwischen diesem und dem Kondensator (C1) befindet.

**2.** Flüssigkristallanzeige wie in Anspruch 1 beansprucht, wobei das Bezugsspannungseinstellmittel eine Diode ist.

**3.** Flüssigkristallanzeige wie in Anspruch 1 oder 2 beansprucht, wobei das Schaltmittel ein Verbindungstransistor mit einem an den Knoten gekoppelten Gate ist.

**4.** Flüssigkristallanzeige des Anspruchs 3, wobei der Verbindungstransistor ein PMOS-Transistor ist, und eine Anode der Diode an das Gate des PMOS-Transistors gekoppelt ist.

**5.** Verfahren zur Ansteuerung eines Flüssigkristallanzeigegeräts, das eine Vielheit von Anzeigezellen enthält, die entsprechende Flüssigkristallkondensatoren (Clc) und Stützkondensatoren (Cst) darin, und eine Vielheit von Gateleitungen aufweisen, wobei jeder besagte Stützkondensator (Cst) an eine Gateleitung angeschlossen ist, besagtes Verfahren folgende Schritte umfasst:

Speichem von Energie in einem Kondensator (C1) einer Schaltung zum Löschen einer Anzeige nach Anwendung eines Stromversorgungssignals (VDD) darauf; und
Abschalten der Vielheit von Anzeigezellen nach Entfemen des Stromversorgungssignals, durch Einschalten eines Verbindungstransistors (M1), der elektrisch in Reihe zwischen einer Bezugserdeleitung und den Gateleitungen gekoppelt ist, so dass die Stützkondensatoren (Cst) und die Flüssigkristallkondensatoren (Clc) zur Bezugserdeleitung entladen werden, wobei die im Kondensator (C1) der Schaltung zum Löschen der Anzeige gespeicherte Energie, in Koordination mit einem Bezugsspannungseinstellmittel (D1), verwendet wird den Verbindungstransistor anzutreiben.

**6.** Verfahren des Anspruchs 5, wobei die Anzeigezellen Dünnschichttransistoren (TFT) umfassen, die Gate-Elektroden aufweisen, die üblicherweise an eine der Gateleitungen angeschlossen sind, und wobei der Verbindungstransistor elektrisch in Reihe zwischen der Bezugserdeleitung und den Gateleitungen gekoppelt ist.

**Revendications**

**1.** Un affichage à cristaux liquides comprenant:

un nombre de lignes de grille;
un nombre de transistors à couche mince (TFT) dont chacun est couplé à une ligne de grille et, par leurs électrodes de drain, respectivement à un condensateur support (Cst) et un condensateur de cristaux liquides (Clc), chacun de ces condensateurs support (Cst) étant également connecté à une ligne de grille;

**caractérisé par**

un circuit (40) pour effacer l'écran, couplé aux lignes de grille et une ligne de terre de référence qui comprend:
un moyen de commutation (42) qui couple les lignes de grille à la ligne de terre de référence en réponse à une tension au niveau d'un noeud (N1) quand une ligne d'énergie (VDD) est fermée, déchargeant ainsi les condensateurs support (Cst) et les condensateurs de cristaux liquides (Clc);
un moyen (D1) pour régler une tension de référence connecté sériellement avec un condensateur (C1) et la ligne de terre de référence, dans lequel le condensateur (C1) est connecté sériellement entre le moyen de réglage de la tension de référence et la ligne d'énergie (VOD); et
dans lequel le moyen de réglage de la tension de référence fixe une tension de référence sur ledit noeud (N1), ce noeud (N1) se trouvant entre le moyen de réglage de tension et le condensateur (C1).

**2.** Un affichage à cristaux liquides selon la revendication 1, dans lequel le moyen de réglage de la tension de référence est une diode.

**3.** Un affichage à cristaux liquide selon la revendication 1 ou 2, dans lequel le moyen de commutation est un transistor ballast ayant une grille couplée à un noeud.

**4.** L'affichage à cristaux liquides de la revendication 3, dans lequel le transistor ballast est un transistor PMOS [SOMP] et l'anode de la diode est couplée à la grille du transistor PMOS.

**5.** Une méthode pour mettre en opération un dispositif d'affichage à cristaux liquides contenant un nombre de cellules d'affichage ayant des condensateurs respectifs à cristaux liquides (Clc) et des condensateurs support (Cst) dedans, et un nombre de lignes de grille, chacun des condensateurs support (Cst) étant connecté à la ligne de grille, cette méthode comprenant les étapes suivantes:

emmagasinage d'énergie dans un condensateur (C1) d'un circuit d'effaçage de l'écran sur actionnement d'un signal (VDD) de fourniture d'énergie au condensateur; et
interrompant les cellules d'affichage quand le signal de fourniture d'énergie est enlevé en mettant en marche un transistor ballast (M1) lequel est couplé électriquement et sériellement entre une ligne de terre de référence et les lignes de la grille, de sorte que les condensateurs support (Cst) et les condensateurs de cristaux liquides (Clc) sont déchargés vers la ligne de terre de référence en utilisant l'énergie emmagasinée dans le condensateur (C1) du circuit d'effaçage de l'écran, en coordination avec le moyen de réglage de la tension de référence (D1) pour entraîner le transistor ballast.

6. La méthode selon la revendication 5, dans laquelle les cellules d'affichage comprennent des transistors à couche mince (TFT) ayant des électrodes de grille généralement connectées à une des lignes de grille, et dans lequel le transistor ballast est couplé électroniquement et sériellement entre la ligne de référence de la prise de terre et la ligne de la grille.

## FIG.1(Prior Art)

## FIG.2(Prior Art)

## FIG.3

## FIG.4

# FIG.5

FIG.6

Data

90

Controller

30

VDD

40

Screen
Clearing
Circuit

GND

50

Gate On/Off
Generator

Voff

N2

Von

10

Gate Driving Circuit

20

Source Driving Circuit

72

7

80

70

0Gate line

1Gate line

2Gate line

3Gate line

nGate line

n+1Gate line

60

EP 0 764 932 B1